# EUROPÄISCHE PATENTSCHRIFT

(11) **EP 3 556 620 B1**
(45) Veröffentlichungstag und Bekanntmachung des Hinweises auf die Patenterteilung: **16.09.2020**
(21) Anmeldenummer: 19166192.5
(22) Anmeldetag: 29.03.2019
(51) Int. Cl.: B60T 15/18, B60T 15/02

(54) **STEUERVENTIL EINER DRUCKLUFTANLAGE**
CONTROL VALVE FOR A COMPRESSED AIR SYSTEM
SOUPAPE DE COMMANDE D'UNE INSTALLATION À AIR COMPRIMÉ

(30) Priorität: 16.04.2018 DE 102018108975
(43) Veröffentlichungstag der Anmeldung: 23.10.2019
(73) Patentinhaber: WABCO Europe BVBA, 1170 Brüssel (BE)
(72) Erfinder: HÖLSCHER, Reiner, 30926 Seelze (DE); MARTINI, Gerhard, 30989 Gehrden (DE); RIEDIGER-JANISCH, Karl-Heinz, 30455 Hannover (DE); ADAMSKI, Krzysztof, 53205 Wroclaw (PL)
(74) Vertreter: Rabe, Dirk-Heinrich

(56) Entgegenhaltungen:
- DE-A1- 2 730 112
- DE-A1- 3 031 012
- DE-A1- 10 120 321
- DE-A1-102008 002 325
- GB-A- 2 273 541

## Beschreibung

Die Erfindung betrifft ein Steuerventil einer Druckluftanlage eines Fahrzeugs, mit mindestens einem Steuerkolben, der axialbeweglich in einem gehäusefesten Zylinder geführt ist, wobei mittels dem Steuerkolben, abgedichtet über mindestens einen am Außenumfang des Steuerkolbens angeordneten Dichtring, zwei Druckräume voneinander getrennt sind.

Straßenfahrzeuge, insbesondere schwere Nutzfahrzeuge und Schienenfahrzeuge, sind häufig mit einer Druckluftversorgungsanlage ausgerüstet, von der Druckluft-Verbraucherkreise, wie Betriebsbremskreise, ein Feststellbremskreis, ein Luftfederungskreis, ein Niveauregelungskreis und/oder Nebenverbraucherkreise mit Druckluft versorgt werden. Um den Arbeitsdruck von Druckluftverbrauchern einzustellen, werden häufig Steuerventile mit mindestens einem axialbeweglich in einem gehäusefesten Zylinder geführten Steuerkolben verwendet. Der Steuerkolben trennt, abgedichtet mittels mindestens einen am Außenumfang des Steuerkolbens angeordneten Dichtring, zwei Druckräume voneinander. Bei einem der Druckräume handelt es sich üblicherweise um einen Arbeitsdruckraum, der mit einem Arbeitsdruckanschluss eines Verbrauchers in Verbindung ist und abhängig von der Axialposition des Steuerkolbens mit einem Versorgungsdruckanschluss oder einem Entlüftungsausgang verbindbar oder gegenüber beiden absperrbar ist. Bei dem anderen Druckraum kann es sich um einen Steuerdruckraum oder um einen über eine Entlüftungsbohrung mit der Umgebung in Verbindung stehenden Ausgleichsraum handeln. Der Steuerkolben kann zur Einstellung seiner Axialposition mechanisch, pneumatisch oder elektromagnetisch verstellt werden. In einer Druckluft-Bremsanlage eines Fahrzeugs kann ein derartiges, in Kolbenbauweise ausgeführtes Steuerventil als ein Motorwagen-Bremsventil, als ein Anhänger-Steuerventil, als ein Anhänger-Bremsventil oder als ein Relaisventil verwendet werden.

Aus der DE 101 20 321 B4 ist ein Relaisventil einer Druckluft-Bremsanlage mit einem pneumatisch verstellbaren Steuerkolben bekannt, bei dem der Steuerkolben in einem Zylinder eines Ventilgehäuses axialbeweglich geführt ist und einen Arbeitsdruckraum von einem Steuerdruckraum trennt. Der Steuerdruckraum ist über ein Magnetventil wechselweise mit einem Steuerdruck beaufschlagbar oder drucklos schaltbar. Zur Abdichtung des Steuerkolbens ist ein Radialdichtring mit einem als äußerer Ringsteg ausgebildeten Befestigungssteg in eine als Ringnut ausgebildete Befestigungsnut in der Innenwand des Zylinders eingesetzt, und der Kolben ist mit einer entsprechend langen, als Dichtfläche wirksamen zylindrischen Außenwand versehen.

In der DE 10 2009 040 759 A1 ist ein weiteres Relaisventil einer Druckluft-Bremsanlage mit einem pneumatisch verstellbaren Steuerkolben beschrieben, bei dem der Steuerkolben in einem Zylinder eines Ventilgehäuses axialbeweglich geführt ist und einen Arbeitsdruckraum von einem Steuerdruckraum trennt. Der Steuerdruckraum ist über ein nicht näher beschriebenes Vorsteuerventil wechselweise mit einem Steuerdruck beaufschlagbar oder drucklos schaltbar. Zur Abdichtung des Steuerkolbens ist ein O-Ring in eine Ringnut eingelegt, welche in der zylindrischen Außenwand des Steuerkolbens ausgebildet ist. Zu seiner axialen Führung ist der Steuerkolben mit einem relativ langen zentralen Lagerzapfen gleitbeweglich in einer zentralen Lagerbohrung eines Gehäusedeckels gelagert.

Ein ähnliches Relaisventil einer Druckluft-Bremsanlage mit einem pneumatisch verstellbaren Steuerkolben ist auch aus der DE 10 2014 009 179 A1 bekannt. Der Steuerkolben ist in einem Zylinder eines Ventilgehäuses axialbeweglich geführt und trennt auch hier einen Arbeitsdruckraum von einem Steuerdruckraum. Zur Abdichtung des Steuerkolbens ist ein Z-förmig profilierter Dichtring in eine Ringnut eingelegt, die in der zylindrischen Außenwand des Steuerkolbens ausgebildet ist. Zu seiner axialen Führung ist der Steuerkolben mittels einer zentralen Führungshülse gleitbeweglich auf einem gehäusefesten Lagerzapfen gelagert.

Aufgrund ihrer Gleitführung über eine zentrale Führungshülse oder einen zentralen Lagerzapfen weisen die Steuerkolben der bekannten Steuerventile jeweils eine ungünstig große axiale Bauhöhe auf, durch welche insbesondere die axialen Abmessungen des betreffenden Steuerventils vergrößert werden. Zudem ist die Abdichtung der durch den jeweiligen Steuerkolben getrennten Druckräume mittels jeweils nur einem am Außenumfang des Steuerkolbens angeordneten Dichtrings bei den beiden letztgenannten Ausführungen der bekannten Steuerventile relativ schwach ausgebildet.

Der vorliegenden Erfindung liegt daher die Aufgabe zu Grunde, bei einem in Kolbenbauweise ausgeführten Steuerventil der eingangs genannten Bauart einen Steuerkolben mit einer weniger axialen Bauraum erfordernden radialen Führung und mit einer verbesserten Abdichtung der durch den Steuerkolben getrennten Druckräume vorzuschlagen.

Diese Aufgabe ist in Verbindung mit den Merkmalen des Oberbegriffs des Anspruchs 1 dadurch gelöst, dass der Dichtring als ein Radialdichtring mit einer weitgehend der axialen Dicke des Steuerkolbens entsprechenden axialen Breite ausgebildet ist, dass der Dichtring an seinen beiden axialen Rändern jeweils eine radial schräg nach außen gerichtete, an der Innenwand des Zylinders anliegende Dichtlippe aufweist, und dass zwischen den beiden Dichtlippen an dem Dichtring mehrere umfangsseitig verteilt angeordnete Führungskörper ausgebildet sind.

Die Erfindung geht demnach aus von einem an sich bekannten Steuerventil einer Druckluftanlage eines Fahrzeugs, mit mindestens einem Steuerkolben, der axialbeweglich in einem gehäusefesten Zylinder geführt ist, wobei mittels dem Steuerkolben, abgedichtet über mindestens einen am Außenumfang des Steuerkolbens angeordneten Dichtring, zwei Druckräume voneinander getrennt sind

Erfindungsgemäß ist der Dichtring als ein Radialdichtring ausgebildet, dessen axiale Breite weitgehend der axialen Dicke des Steuerkolbens entspricht. An seinen beiden axialen Rändern weist der Dichtring jeweils eine radial schräg nach außen gerichtete, an der als Dichtfläche wirksamen Innenwand des Zylinders anliegende Dichtlippe auf, so dass die durch den Steuerkolben voneinander getrennten Druckräume gut gegeneinander abgedichtet sind. Zwischen den beiden Dichtlippen des Dichtrings sind mehrere umfangsseitig verteilt angeordnete Führungskörper oder zumindest ein umlaufender Führungskörper angeordnet, mittels denen der Steuerkolben an der Innenwand des gehäusefesten Zylinders gleitbeweglich geführt ist.

Somit kann auf die radiale Führung des Steuerkolbens über eine zentrale Führungshülse oder einen zentralen Führungszapfen verzichtet oder eine derartige Gleitführung axial kürzer als bisher üblich ausgebildet sein. Die erforderliche axiale Gesamthöhe des erfindungsgemäßen Steuerkolbens ist dadurch kleiner, so dass das betreffende Steuerventil zumindest in seinen axialen Abmessungen kompakter ausgebildet ist. Zudem wird die Abdichtung der Druckräume durch die beziehungsweise durch den an den Dichtring integrierten Führungskörper unterstützt, indem eine gekippte oder exzentrische Lage des Steuerkolbens verhindert wird, durch welche mindestens eine der Dichtlippen umfangsseitig lokal stark eingedrückt und die andere oder dieselbe Dichtlippe diagonal gegenüberliegend schwächer an die Innenwand des Zylinders angedrückt oder sogar von dieser abgehoben werden könnte.

Zu seiner stabilen Befestigung auf dem Steuerkolben weist der Dichtring gemäß einer Weiterbildung an seiner Innenseite eine als radiale Ringnut ausgebildete Befestigungsnut auf, die im montierten Zustand einen am Außenumfang des Steuerkolbens angeordneten, als radialen Ringsteg ausgebildeten Befestigungssteg umgreift.

Bei der Ausführung des Dichtrings mit mehreren umfangsseitig verteilt angeordneten Führungskörpern sind diese Führungskörper bevorzugt als radial erhobene, unde Führungsnoppen mit radial äußerer zylindrischer Gleitfläche ausgebildet, die axial mittig zwischen den Dichtlippen angeordnet sind.

Bei einer anderen Ausführungsform des Dichtrings ist vorgesehen, dass der Führungskörper des Dichtrings als ein radial erhobener Ringsteg mit einer äußeren zylindrischen Gleitfläche ausgebildet ist, der axial mittig zwischen den Dichtlippen angeordnet ist sowie umfangsbezogene Unterbrechungen aufweist.

Zur Ableitung von leckagebedingt über eine der beiden Dichtlippen eingedrungener Druckluft ist zwischen dem Außenumfang des Kolbens und der radialen Innenseite des Dichtrings vorteilhaft ein ringförmiger Entlüftungsraum ausgebildet, der über mindestens eine in dem Dichtring angeordnete radiale Entlüftungsbohrung mit einem zwischen den Dichtlippen des Dichtrings und der Innenwand des Zylinders eingeschlossenen Zwischenraum sowie mit einem in dem Steuerkolben angeordneten Entlüftungskanal in Verbindung steht.

Der ringförmige Entlüftungsraum ist bevorzugt von einer radialen Ringnut umgrenzt, die axial mittig in der Bodenwand der Befestigungsnut des Dichtrings ausgebildet ist.

Alternativ dazu ist es auch möglich, dass der ringförmige Entlüftungsraum von einer radialen Ringnut umgrenzt ist, die axial mittig in der Außenwand des Befestigungssteges des Steuerkolbens ausgebildet ist.

Bei einer Ausführung des Dichtrings mit mehreren umfangsseitig verteilt angeordneten Führungskörpern sind die Entlüftungsbohrungen in dem Dichtring zweckmäßig umfangsseitig weitgehend mittig zwischen den Führungskörpern angeordnet, um aus beiden axialen Richtungen eine ungehinderte Zuströmung von in den Zwischenraum eingedrungener Druckluft zu ermöglichen.

Bei einer Ausführung des Dichtrings mit einem umlaufenden, ringstegförmigen Führungskörper ist vorgesehen, dass dieser im Bereich der Entlüftungsbohrungen des Dichtrings unterbrochen, um aus beiden axialen Richtungen eine ungehinderte Zuströmung von in den Zwischenraum eingedrungener Druckluft zu ermöglichen.

Der Entlüftungskanal ist bevorzugt als eine zylindrische Rohrleitung oder als eine ringzylindrische Rohrleitung ausgebildet, welcher zentral in oder koaxial zu der Mittelachse des Steuerkolbens in demselben ausgebildet ist. Der ringförmige Entlüftungsraum steht dann über mindestens eine in dem Steuerkolben ausgebildete radiale Entlüftungsbohrung mit dem Entlüftungskanal in Verbindung.

Die Erfindung wird nachstehend anhand von zwei in der beigefügten Zeichnung dargestellten Ausführungsbeispielen näher erläutert. In der Zeichnung zeigt
Fig. 1 eine erste Ausführungsform eines Steuerkolbens des erfindungsgemäßen Steuerventils in einer perspektivischen Ansicht,
Fig. 2 eine zweite Ausführungsform eines Steuerkolbens des erfindungsgemäßen Steuerventils in einer perspektivischen Ansicht,
Fig. 3 eine erste Variante beider Ausführungen des Steuerkolbens des erfindungsgemäßen Steuerventils gemäß Fig. 1 und Fig. 2 in einer perspektivischen Schnittansicht,
Fig. 4 eine zweite Variante beider Ausführungen des Steuerkolbens des erfindungsgemäßen Steuerventils gemäß Fig. 1 und Fig. 2 in einer perspektivischen Schnittansicht, und
Fig. 5 das erfindungsgemäße Steuerventil in einem teilweisen Mittelschnitt.

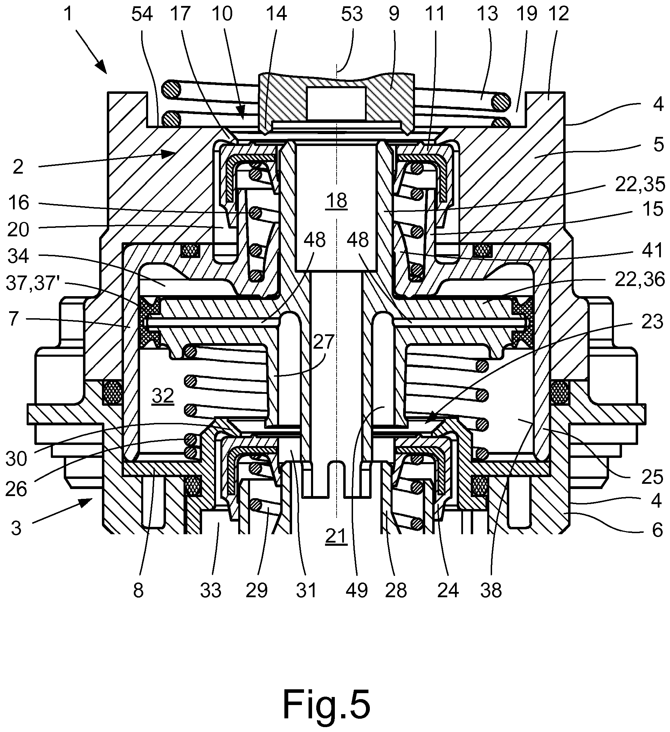

In Fig. 5 ist in einem Ausschnitt eines Mittelschnitts durch eine Ventileinheit 1 abgebildet, die zwei in Kolbenbauweise ausgeführte Steuerventile 2, 3 aufweist. Die Ventileinheit 1 kann beispielsweise in einer Druckluft-Bremsanlage eines Kraftfahrzeugs mit zwei Bremskreisen als ein Anhänger-Steuerventil oder als ein Anhänger-Bremsventil verwendet werden. Die Ventileinheit 1 weist ein Ventilgehäuse 4 auf, das ein Gehäuseoberteil 5 und ein Gehäuseunterteil 6 umfasst, die miteinander verbunden sind. In einem von den beiden Gehäuseteilen 5, 6 eingeschlossenen, abgestuft zylindrischen Innenraum sind ein weitgehend topfzylindrischer oberer Gehäuseeinsatz 7 und ein weitgehend topfzylindrischer unterer Gehäuseeinsatz 8 unverschiebbar angeordnet.

Das in Fig. 5 nur teilweise abgebildete erste Steuerventil 2 ist im oberen Teil des Ventilgehäuses 4 angeordnet und weist einen Steuerkolben 9 und einen mit diesem zusammenwirkenden Dichtkolben 11 eines oberen Sitzventils 10 auf. Der Steuerkolben 9 ist in einem Zylinder 12 des Gehäuseoberteils 5 axialbeweglich geführt, wird von einer als Schraubenfeder ausgebildeten Druckfeder 13, die an einem Absatz 54 des Gehäuseoberteils 5 abgestützt ist, nach axial oben belastet, und weist auf seiner Unterseite einen ringstegförmigen inneren Ventilsitz 14 des oberen Sitzventils 10 auf.

Der Dichtkolben 11 des oberen Sitzventils 10 ist auf einem zylindrischen Führungsabschnitt 15 des oberen Gehäuseeinsatzes 7 axialbeweglich geführt und von einer als Schraubenfeder ausgebildeten Druckfeder 16, die an dem oberen Gehäuseeinsatz 7 abgestützt ist, nach axial oben in Richtung eines in dem Gehäuseoberteil 5 angeordneten ringstegförmigen äußeren Ventilsitzes 17 belastet. Ein von dem Steuerkolben 9 in dem Zylinder 12 des Gehäuseoberteils 5 eingeschlossener Arbeitsdruckraum 19, an den zum Beispiel eine zu den Radbremszylindern eines Bremskreises führende Bremsleitung angeschlossen sein kann, ist abhängig von der Axialposition des Steuerkolbens 9 mit einem unterhalb des äußeren Ventilsitzes 17 zwischen dem Gehäuseoberteil 5 und dem oberen Gehäuseeinsatz 7 befindlichen ringförmigen Versorgungsdruckraum 20 oder über einen zentralen Entlüftungskanal 18 mit einem in dem Ventilgehäuse 4 unten mittig angeordneten Entlüftungsdruckraum 21 verbindbar oder gegenüber diesen beiden Druckräumen 20, 21 absperrbar. Der Entlüftungskanal 18 ist zentral in und koaxial zu der Mittelachse 53 des Steuerkolbens 22 in demselben ausgebildet.

Wenn der Steuerkolben 9 mit seinem inneren Ventilsitz 14 an dem Dichtkolben 11 des oberen Sitzventils 10 anliegt und diesen von dem äußeren Ventilsitz 17 weggedrückt hat, ist der Arbeitsdruckraum 19 mit dem mit einer Druckluftquelle beziehungsweise einer Versorgungsdruckleitung in Verbindung stehenden Versorgungsdruckraum 20 verbunden, so dass der Arbeitsdruck in dem Arbeitsdruckraum 19 erhöht wird. Sofern der Steuerkolben 9 mit seinem inneren Ventilsitz 14 von dem Dichtkolben 11 des oberen Sitzventils 10 abgehoben hat, und der Dichtkolben 11 an dem äußeren Ventilsitz 17 anliegt, ist der Arbeitsdruckraum 19 mit dem über einen nicht abgebildeten Schalldämpfer mit der Umgebung in Verbindung stehenden Entlüftungsdruckraum 21 verbunden, so dass der Arbeitsdruck in dem Arbeitsdruckraum 19 verringert wird. Wenn der Steuerkolben 9 mit seinem inneren Ventilsitz 14 an dem Dichtkolben 11 des oberen Sitzventils 10 anliegt, ohne diesen von dem äußeren Ventilsitz 17 abzuheben, ist der Arbeitsdruckraum 19 gegenüber dem Versorgungsdruckraum 20 und dem Entlüftungsdruckraum 21 abgesperrt, so dass der Arbeitsdruck in dem Arbeitsdruckraum 19 konstant gehalten wird.

Das in Fig. 5 vollständig abgebildete zweite Steuerventil 3 ist im unteren Teil des Ventilgehäuses 4 angeordnet und weist einen Steuerkolben 22 sowie ein mit diesem zusammenwirkenden Dichtkolben 24 eines unteren Sitzventils 23 auf. Der Steuerkolben 22 ist in einem Zylinder 25 des oberen Gehäuseeinsatzes 7 axialbeweglich geführt, wird von einer als Schraubenfeder ausgebildeten Druckfeder 26, die an dem unteren Gehäuseeinsatz 8 abgestützt ist, nach oben belastet, und weist auf seiner Unterseite einen ringstegförmigen inneren Ventilsitz 27 des unteren Sitzventils 23 auf. Der Dichtkolben 24 des unteren Sitzventils 23 ist auf einem zylindrischen Führungsabschnitt 28 des Gehäuseunterteils 6 axialbeweglich geführt und von einer als Schraubenfeder ausgebildeten Druckfeder 29, die an dem Gehäuseunterteil 6 abgestützt ist, nach oben in Richtung eines in dem unteren Gehäuseeinsatz 8 angeordneten ringstegförmigen äußeren Ventilsitzes 30 belastet. Ein von dem Steuerkolben 22 in dem Zylinder 25 des oberen Gehäuseeinsatzes 7 eingeschlossener Arbeitsdruckraum 32 ist abhängig von der Axialposition des Steuerkolbens 22 mit einem unterhalb des äußeren Ventilsitzes 30 zwischen dem unteren Gehäuseeinsatz 8 und dem Gehäuseunterteil 6 befindlichen ringförmigen Versorgungsdruckraum 33 oder über eine zentrale Öffnung 31 in dem Dichtkolben 24 des unteren Sitzventils 23 mit dem Entlüftungsdruckraum 21 verbindbar oder gegenüber beiden Druckräumen 21, 33 absperrbar.

Die Axialposition des Steuerkolbens 22 ist dadurch einstellbar, dass ein in einem Steuerdruckraum 34 wirksamer Steuerdruck zum Beispiel mittels eines Magnetventils in geeigneter Weise eingestellt wird. Der Steuerdruckraum 34 ist dem Arbeitsdruckraum 32 axial gegenüberliegend von dem Steuerkolben 22 in dem Zylinder 25 des oberen Gehäuseeinsatzes 7 eingeschlossen. Wenn der Steuerkolben 22 mit seinem inneren Ventilsitz 27 an dem Dichtkolben 24 des unteren Sitzventils 23 anliegt und diesen von dem äußeren Ventilsitz 30 weggedrückt hat, ist der Arbeitsdruckraum 32 mit dem mit einer Druckluftquelle in Verbindung stehenden Versorgungsdruckraum 33 verbunden, so dass der Arbeitsdruck in dem Arbeitsdruckraum 32 erhöht wird. Sofern der Steuerkolben 22 mit seinem inneren Ventilsitz 27 von dem Dichtkolben 24 des unteren Sitzventils 23 abgehoben hat, und der Dichtkolben 24 an dem äußeren Ventilsitz 30 anliegt, ist der Arbeitsdruckraum 32 mit dem Entlüftungsdruckraum 21 verbunden, so dass der Arbeitsdruck in dem Arbeitsdruckraum 32 verringert wird. Diese Betriebsstellung ist in Fig. 5 dargestellt. Wenn der Steuerkolben 22 mit seinem inneren Ventilsitz 27 an dem Dichtkolben 24 des unteren Sitzventils 23 anliegt, ohne diesen von dem äußeren Ventilsitz 30 abzuheben, ist der Arbeitsdruckraum 32 gegenüber dem Versorgungsdruckraum 33 und dem Entlüftungsdruckraum 21 abgesperrt, so dass der Arbeitsdruck in dem Arbeitsdruckraum 32 konstant gehalten wird.

Der Steuerkolben 22 des zweiten Steuerventils 3 weist oben einen zentralen Rohrkörper 35 und darunter einen kreisscheibenförmigen Kolbenkörper 36 auf, die einstückig miteinander verbunden sind. Innerhalb des Rohrkörpers 35 befindet sich der Entlüftungskanal 18 des ersten Steuerventils 2. Der Kolbenkörper 36 trennt den Steuerdruckraum 34 von dem Arbeitsdruckraum 32 und weist zur Abdichtung einen an seinem Außenumfang angeordneten Dichtring 37, 37' auf. Der Dichtring 37, 37' ist als ein Radialdichtring mit einer weitgehend der Dicke des Kolbenkörpers 36 entsprechenden axialen Breite ausgebildet. Der Dichtring 37, 37' weist an seinen beiden axialen Rändern jeweils eine radial schräg nach außen gerichtete erste beziehungsweise zweite Dichtlippe 39, 40 auf, welche an der als Dichtfläche wirksamen Innenwand 38 des Zylinders 25 des oberen Gehäuseeinsatzes 7 anliegen. Zwischen den beiden Dichtlippen 39, 40 ist der Dichtring 37, 37' mit mehreren umfangsseitig verteilt angeordneten Führungskörpern 50 oder mit einem umlaufenden Führungskörper 51 versehen, die in Fig. 5 nicht sichtbar sind. Außer über eine Gleitführung des Rohrkörpers 35 des Steuerkolbens 22 in einem zylindrischen Führungsabschnitt 41 des oberen Gehäuseeinsatzes 7 sowie über eine radial an dem Kolbenkörper 36 und dem unteren Gehäuseeinsatz 8 abgestützte Schraubenfeder 26 ist der Steuerkolben 22 somit auch über den Dichtring 37, 37' radial geführt.

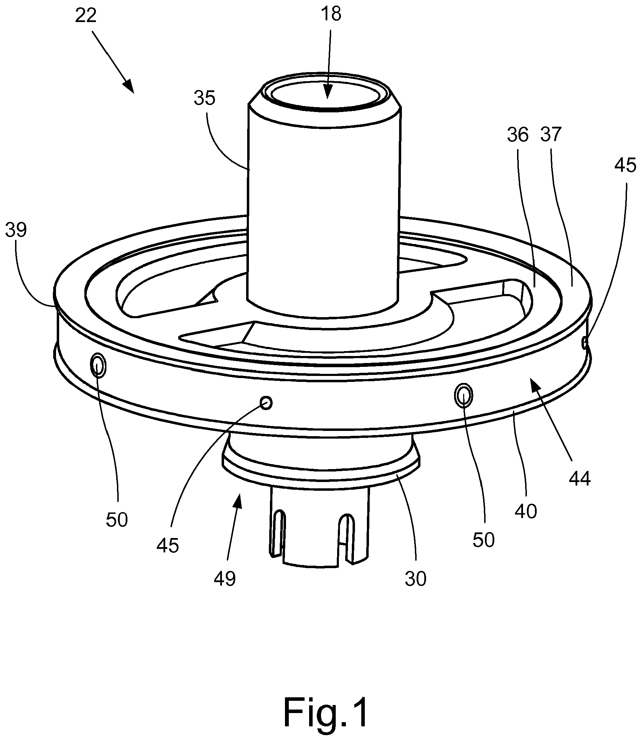

Wie in den Figuren 1 bis 4 besser erkennbar ist, weist der Dichtring 37, 37' zu seiner formschlüssigen Fixierung auf dem Steuerkolben 22 an seiner radialen Innenseite eine als radiale Ringnut ausgebildete Befestigungsnut 42 auf, die einen am Außenumfang des Kolbenkörpers 36 ausgebildeten, als radialen Ringsteg ausgebildeten Befestigungssteg 43 umgreift. Zwischen dem Außenumfang des Kolbenkörpers 36 und der radialen Innenseite des Dichtrings 37, 37' ist ein ringförmiger Entlüftungsraum 46, 47 ausgebildet, der über mehrere in dem Dichtring 37, 37' ausgebildete radiale Entlüftungsbohrungen 45 mit einem zwischen den beiden Dichtlippen 39, 40 des Dichtrings 37, 37' und der Innenwand 38 des Zylinders 25 des oberen Gehäuseeinsatzes 7 eingeschlossenen Zwischenraum 44 sowie mit einem in dem Steuerkolben 22 angeordneten Entlüftungskanal 49 in Verbindung ist.

Der Entlüftungskanal 49 ist als eine ringzylindrische Rohrleitung ausgebildet, die im unteren Teil des Steuerkolbens 22 koaxial um den zentralen Rohrkörper 35 angeordnet und nach oben geschlossen ist, und die nach unten offen in den Entlüftungsdruckraum 21 mündet. Der ringförmige Entlüftungsraum 46, 47 steht über mehrere in dem Kolbenkörper 36 angeordnete radiale Entlüftungsbohrungen 48 mit dem Entlüftungskanal 49 in Verbindung.

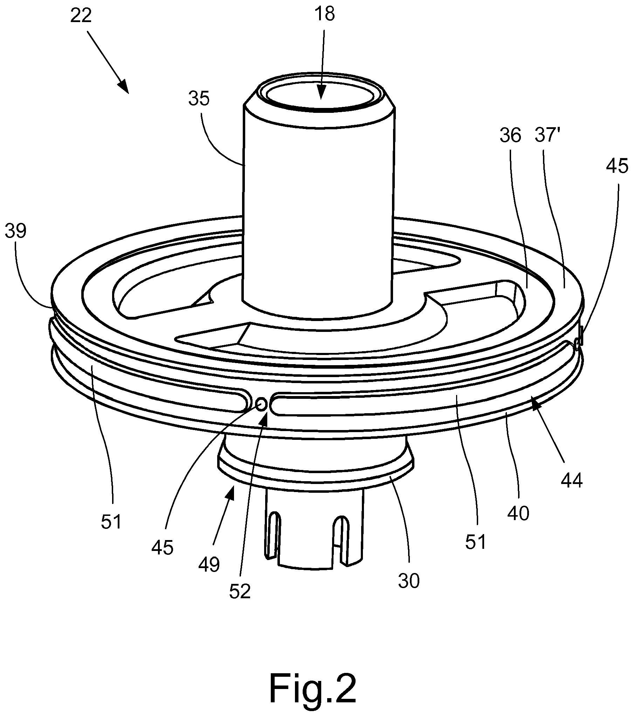

Zwei bevorzugte Ausführungsformen des Dichtrings 37, 37' werden nachfolgend anhand der perspektivischen Ansichten des Steuerkolbens 22 in Fig. 1 und Fig. 2 näher erläutert. In der ersten Ausführungsform gemäß Fig. 1 weist der Dichtring 37 axial mittig zwischen den beiden Dichtlippen 39, 40 mehrere, vorliegend beispielhaft vier umfangsseitig verteilt angeordnete Führungskörper 50 auf, die als radial erhobene und runde Führungsnoppen mit jeweils radial äußeren zylindrischen Gleitflächen ausgebildet sind. Umfangsseitig weitgehend mittig zwischen jeweils zwei benachbarten Führungskörpern 50 ist jeweils eine radiale Entlüftungsbohrung 45 in dem Dichtring 37 ausgebildet, so dass eine Zuströmung von über beide Dichtlippen 39, 40 in den Zwischenraum 44 eingedrungener Druckluft zu dem Entlüftungsbohrungen 45 möglich ist.

Bei der zweiten Ausführungsform gemäß Fig. 2 weist der Dichtring 37' axial mittig zwischen den beiden Dichtlippen 39, 40 einen umlaufenden Führungskörper 51 auf, der als ein radial erhobener Ringsteg mit einer äußeren zylindrischen Gleitfläche ausgebildet ist. Genau genommen besteht dieser Führungskörper 51 aus mehreren vergleichsweise langen Ringstegsegmenten, die durch Unterbrechungen 52 gering voneinander beabstandet sind. Umfangsseitig verteilt sind mehrere, vorliegend beispielhaft vier radiale Entlüftungsbohrungen 45 in dem Dichtring 37' ausgebildet, in deren Bereich der Führungskörper 51 jeweils unterbrochen ist, um eine Zuströmung von über beide Dichtlippen 39, 40 in den Zwischenraum 44 eingedrungener Druckluft zu ermöglichen.

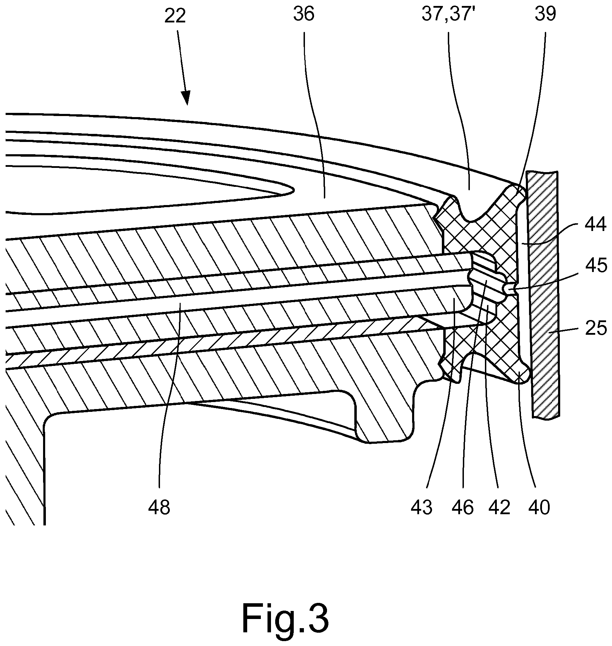

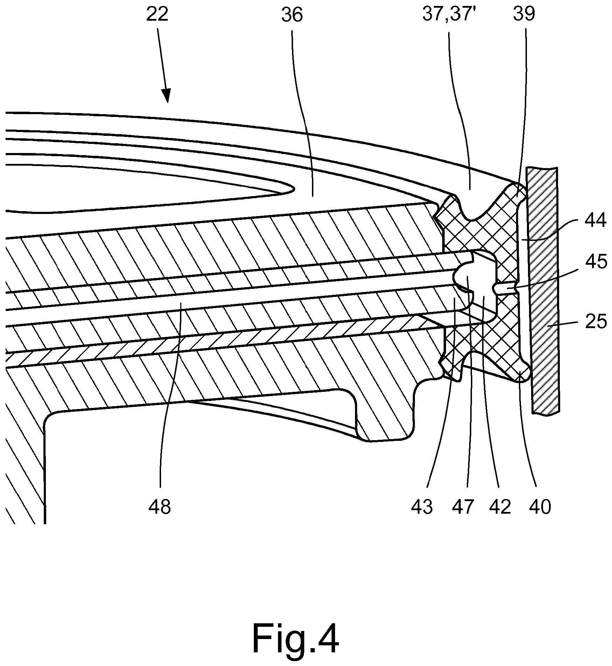

Zwei mögliche Varianten des Steuerkolbens 22 und des Dichtrings 37, 37', die in Verbindung mit beiden vorbeschriebenen Ausführungen des Dichtrings 37, 37' zur Anwendung kommen können, werden nachfolgend anhand der perspektivischen Schnittansichten des Steuerkolbens 22 mit abgestuften Schnittflächen in Fig. 3 und Fig. 4 näher erläutert. In der ersten Variante des Steuerkolbens 22 und des Dichtrings 37, 37' gemäß Fig. 3 ist der ringförmige Entlüftungsraum 46 als eine radiale Ringnut ausgebildet, die axial mittig in der Bodenwand der Befestigungsnut 42 des Dichtrings 37, 37' ausgebildet ist. Die in dem Dichtring 37, 37' angeordneten Entlüftungsbohrungen 45 sind dadurch bedingt relativ kurz ausgebildet. In der zweiten Variante des Steuerkolbens 22 und des Dichtrings 37, 37' gemäß Fig. 4 ist der ringförmige Entlüftungsraum 47 durch eine radiale Ringnut gebildet, die axial mittig in der Außenwand des Befestigungssteges 43 des Steuerkolbens 22 ausgebildet ist. Die in dem Dichtring 37, 37' angeordneten Entlüftungsbohrungen 45 sind daher bei einer dickeren Dichtringswand etwas länger ausgeführt.

### Bezugszeichenliste (Teil der Beschreibung)

- 1: Ventileinheit
- 2: Erstes Steuerventil
- 3: Zweites Steuerventil
- 4: Ventilgehäuse
- 5: Gehäuseoberteil des Ventilgehäuses
- 6: Gehäuseunterteil des Ventilgehäuses
- 7: Oberer Gehäuseeinsatz
- 8: Unterer Gehäuseeinsatz
- 9: Steuerkolben
- 10: Oberes Sitzventil
- 11: Dichtkolben
- 12: Zylinder des Gehäuseoberteils
- 13: Druckfeder, Schraubenfeder
- 14: Innerer Ventilsitz
- 15: Führungsabschnitt
- 16: Druckfeder, Schraubenfeder
- 17: Äußerer Ventilsitz
- 18: Entlüftungskanal
- 19: Arbeitsdruckraum
- 20: Versorgungsdruckraum
- 21: Entlüftungsdruckraum
- 22: Steuerkolben
- 23: Unteres Sitzventil
- 24: Dichtkolben
- 25: Zylinder des oberen Gehäuseeinsatzes
- 26: Druckfeder, Schraubenfeder
- 27: Innerer Ventilsitz
- 28: Führungsabschnitt
- 29: Druckfeder, Schraubenfeder
- 30: Äußerer Ventilsitz
- 31: Öffnung
- 32: Arbeitsdruckraum
- 33: Versorgungsdruckraum
- 34: Steuerdruckraum
- 35: Rohrkörper
- 36: Kolbenkörper
- 37, 37': Dichtring, Radialdichtring
- 38: Innenwand
- 39: Erste Dichtlippe
- 40: Zweite Dichtlippe
- 41: Führungsabschnitt
- 42: Befestigungsnut, Ringnut
- 43: Befestigungssteg, Ringsteg
- 44: Zwischenraum
- 45: Entlüftungsbohrung
- 46: Entlüftungsraum, Ringnut
- 47: Entlüftungsraum, Ringnut
- 48: Entlüftungsbohrung
- 49: Entlüftungskanal
- 50: Führungskörper, Führungsnoppe
- 51: Führungskörper, Ringsteg
- 52: Unterbrechung im Ringsteg
- 53: Mittelachse des Steuerkolbens
- 54: Absatz am Gehäuseoberteil

## Patentansprüche

1. Steuerventil (3) einer Druckluftanlage eines Fahrzeugs, mit mindestens einem Steuerkolben (22), der axialbeweglich in einem gehäusefesten Zylinder (25) geführt ist, wobei mittels dem Steuerkolben (22), abgedichtet über mindestens einen am Außenumfang des Steuerkolbens (22, 36) angeordneten Dichtring (37, 37'), zwei Druckräume (32, 34) voneinander getrennt sind, **dadurch gekennzeichnet, dass** der Dichtring (37, 37') als ein Radialdichtring mit einer weitgehend der axialen Dicke des Steuerkolbens (22, 36) entsprechenden axialen Breite ausgebildet ist, dass der Dichtring (37, 37') an seinen beiden axialen Rändern jeweils eine radial schräg nach außen gerichtete, an der Innenwand (38) des Zylinders (25) anliegende Dichtlippe (39, 40) aufweist, und dass zwischen den beiden Dichtlippen (39, 40) an dem Dichtring (37, 37') mehrere umfangsseitig verteilt angeordnete Führungskörper (50, 51) ausgebildet sind.

2. Steuerventil nach Anspruch 1, **dadurch gekennzeichnet, dass** der Dichtring (37, 37') an seiner Innenseite eine als radiale Ringnut ausgebildete Befestigungsnut (42) aufweist, die im montierten Zustand einen am Außenumfang des Steuerkolbens (22, 36) angeordneten, als radialen Ringsteg ausgebildeten Befestigungssteg (43) umgreift.

3. Steuerventil nach Anspruch 1 oder 2, **dadurch gekennzeichnet, dass** die Führungskörper (50) des Dichtrings (37) als radial erhobene, runde Führungsnoppen mit einer äußeren zylindrischen Gleitfläche ausgebildet sind, welche axial mittig zwischen den Dichtlippen (39, 40) angeordnet sind.

4. Steuerventil nach Anspruch 1 oder 2, **dadurch gekennzeichnet, dass** der Führungskörper (51) des Dichtrings (37') als ein radial erhobener Ringsteg mit einer äußeren zylindrischen Gleitfläche ausgebildet ist, der axial mittig zwischen den Dichtlippen (39, 40) angeordnet ist sowie umfangsbezogene Unterbrechungen (52) aufweist.

5. Steuerventil nach einem der Ansprüche 1 bis 4, **dadurch gekennzeichnet, dass** zwischen dem Außenumfang des Kolbens (22, 36) und der radialen Innenseite des Dichtrings (37, 37') ein ringförmiger Entlüftungsraum (46, 47) ausgebildet ist, der über mindestens eine in dem Dichtring (37, 37') ausgebildete radiale Entlüftungsbohrung (45) mit einem zwischen den Dichtlippen (39, 40) des Dichtrings (37, 37') und der Innenwand (38) des Zylinders (25) eingeschlossenen Zwischenraum (44) sowie mit einem in dem Steuerkolben (22) ausgebildeten Entlüftungskanal (49) in Verbindung ist.

6. Steuerventil nach Anspruch 5, **dadurch gekennzeichnet, dass** der ringförmige Entlüftungsraum (46) von einer radialen Ringnut umgrenzt ist, die axial mittig in der Bodenwand der Befestigungsnut (42) des Dichtrings (37, 37') ausgebildet ist.

7. Steuerventil nach Anspruch 5, **dadurch gekennzeichnet, dass** der ringförmige Entlüftungsraum (47) von einer radialen Ringnut umgrenzt ist, die axial mittig in der Außenwand des Befestigungssteges (43) des Steuerkolbens (22, 36) ausgebildet ist.

8. Steuerventil nach einem der Ansprüche 3 und 5 bis 7, **dadurch gekennzeichnet, dass** die Entlüftungsbohrungen (45) in dem Dichtring (37) umfangsseitig weitgehend mittig zwischen den noppenförmigen Führungskörpern (50) ausgebildet sind.

9. Steuerventil nach einem der Ansprüche 4 bis 7, **dadurch gekennzeichnet, dass** die Entlüftungsbohrungen (45) in dem Dichtring (37) im Bereich der Unterbrechungen (52) des ringstegförmigen Führungskörpers (51) ausgebildet sind.

10. Steuerventil nach einem der Ansprüche 5 bis 9, **dadurch gekennzeichnet, dass** der Entlüftungskanal (49) als eine zylindrische Rohrleitung oder als eine ringzylindrische Rohrleitung ausgebildet, welcher zentral in oder koaxial zu der Mittelachse (53) des Steuerkolbens (22) in demselben ausgebildet ist.

11. Steuerventil nach einem der Ansprüche 5 bis 9, **dadurch gekennzeichnet, dass** der ringförmige Entlüftungsraum (46, 47) über mindestens eine in dem Steuerkolben (22, 36) ausgebildete radiale Entlüftungsbohrung (48) mit dem Entlüftungskanal (49) in Verbindung ist.

## Claims

1. Control valve (3) of a compressed air system of a vehicle, comprising at least one control piston (22), which is guided in an axially movable manner in a cylinder (25) which is fixed to the housing, two pressure chambers (32, 34) being separated from one another by means of the control piston (22), which is sealed by at least one sealing ring (37, 37') arranged on the outer circumference of the control piston (22, 36), **characterized in that** the sealing ring (37, 37') is in the form of a radial sealing ring having an axial width which substantially corresponds to the axial thickness of the control piston (22, 36), **in that** the sealing ring (37, 37') has, on the two axial edges thereof, in each case one radially obliquely outwardly directed sealing lip (39, 40) which is in contact with the inner wall (38) of the cylinder (25), and **in that** a plurality of guide members (50, 51) which are arranged so as to be distributed over the circumference are formed between the two sealing lips (39, 40) on the sealing ring (37, 37').

2. Control valve according to Claim 1, **characterized in that** the sealing ring (37, 37') has a fastening groove (42) in the form of a radial annular groove on the inner face thereof, which groove, in the mounted state, encompasses a fastening web (43) which is arranged on the outer circumference of the control piston (22, 36) and is in the form of a radial annular web.

3. Control valve according to either Claim 1 or Claim 2, **characterized in that** the guide members (50) of the sealing ring (37) are in the form of radially raised, round guide knobs having an outer cylindrical sliding surface which are arranged axially centrally between the sealing lips (39, 40).

4. Control valve according to either Claim 1 or Claim 2, **characterized in that** the guide member (51) of the sealing ring (37') is in the form of a radially raised annular web having an outer cylindrical sliding surface, which web is arranged axially centrally between the sealing lips (39, 40) and has interruptions (52) over the circumference.

5. Control valve according to any of Claims 1 to 4, **characterized in that**, between the outer circumference of the piston (22, 36) and the radial inner face of the sealing ring (37, 37'), an annular ventilation space (46, 47) is formed, which is connected by means of at least one radial ventilation hole (45) formed in the sealing ring (37, 37') to an intermediate space (44) enclosed between the sealing lips (39, 40) of the sealing ring (37, 37') and the inner wall (38) of the cylinder (25), and to a ventilation channel (49) formed in the control piston (22).

6. Control valve according to Claim 5, **characterized in that** the annular ventilation space (46) is delimited by a radial annular groove, which is formed axially centrally in the bottom wall of the fastening groove (42) of the sealing ring (37, 37').

7. Control valve according to Claim 5, **characterized in that** the annular ventilation space (47) is delimited by a radial annular groove, which is formed axially centrally in the outer wall of the fastening web (43) of the control piston (22, 36).

8. Control valve according to any of Claims 3 and 5 to 7, **characterized in that** the ventilation holes (45) in the sealing ring (37) are formed substantially centrally over the circumference between the knob-shaped guide members (50).

9. Control valve according to any of Claims 4 to 7, **characterized in that** the ventilation holes (45) in the sealing ring (37) are formed in the region of the interruptions (52) of the annular-web-shaped guide member (51) .

10. Control valve according to any of Claims 5 to 9, **characterized in that** the ventilation channel (49) is in the form of a cylindrical pipeline or of an annular cylindrical pipeline, which is formed centrally in or coaxially with the central axis (53) of the control piston (22) in the same.

11. Control valve according to any of Claims 5 to 9, **characterized in that** the annular ventilation space (46, 47) is connected to the ventilation channel (49) by at least one radial ventilation hole (48) formed in the control piston (22, 36).

## Revendications

1. Soupape de commande (3) destinée à un système à air comprimé d'un véhicule, ladite soupape comprenant au moins un piston de commande (22) qui est guidé axialement dans un cylindre (25) fixé au boîtier, deux chambres de pression (32, 34) étant séparées l'une de l'autre au moyen du piston de commande (22) de manière étanche par le biais d'au moins une bague d'étanchéité (37, 37') disposée sur la circonférence extérieure du piston de commande (22, 36), **caractérisée en ce que** la bague d'étanchéité (37, 37') est conçue comme une bague d'étanchéité radiale dont la largeur axiale correspond dans une large mesure à l'épaisseur axiale du piston de commande (22, 36), **en ce que** la bague d'étanchéité (37, 37') comporte sur chacun de ses deux bords axiaux une lèvre d'étanchéité (39, 40) qui est dirigée de manière radialement oblique vers l'extérieur et qui vient en appui sur la paroi intérieure (38) du cylindre (25), et **en ce qu'**une pluralité d'éléments de guidage (50, 51) répartis sur la circonférence sont formés sur la bague d'étanchéité (37, 37') entre les deux lèvres d'étanchéité (39, 40).

2. Soupape de commande selon la revendication 1, **caractérisée en ce que** la bague d'étanchéité (37, 37') comporte sur son côté intérieur une rainure de fixation (42) en forme de rainure annulaire radiale qui s'engage, à l'état monté, autour d'une nervure de fixation (43) disposée sur la circonférence extérieure du piston de commande (22, 36) et conçue comme une nervure annulaire radiale.

3. Soupape de commande selon la revendication 1 ou 2, **caractérisée en ce que** les éléments de guidage (50) de la bague d'étanchéité (37) sont réalisés sous la forme de boutons de guidage ronds saillant radialement qui sont pourvus d'une surface de glissement cylindrique extérieure qui est disposée axialement au centre entre les lèvres d'étanchéité (39, 40).

4. Soupape de commande selon la revendication 1 ou 2, **caractérisée en ce que** l'élément de guidage (51) de la bague d'étanchéité (37') est conçu sous la forme d'une nervure annulaire saillant radialement qui est pourvue d'une surface de glissement cylindrique extérieure qui est disposée axialement au centre entre les lèvres d'étanchéité (39, 40) et qui comporte des interruptions circonférentielles (52).

5. Soupape de commande selon l'une des revendications 1 à 4, **caractérisée en ce qu'**un espace de purge annulaire (46, 47) est ménagé entre la circonférence extérieure du piston (22, 36) et le côté intérieur radial de la bague d'étanchéité (37, 37'), qui est en liaison, par le biais d'au moins un alésage de purge radial (45) ménagé dans la bague d'étanchéité (37, 37'), avec un espace intermédiaire (44) enfermé entre les lèvres d'étanchéité (39, 40) de la bague d'étanchéité (37, 37') et la paroi intérieure (38) du cylindre (25) et avec un conduit de purge (49) ménagé dans le piston de commande (22).

6. Soupape de commande selon la revendication 5, **caractérisée en ce que** l'espace de purge annulaire (46) est délimité par une rainure annulaire radiale qui est formée axialement au centre dans la paroi inférieure de la rainure de fixation (42) de la bague d'étanchéité (37, 37').

7. Soupape de commande selon la revendication 5, **caractérisée en ce que** l'espace de purge annulaire (47) est délimité par une rainure annulaire radiale qui est formée axialement au centre dans la paroi externe de la nervure de fixation (43) du piston de commande (22, 36) .

8. Soupape de commande selon l'une des revendications 3 et 5 à 7, **caractérisée en ce que** les alésages de purge (45) sont ménagés dans la bague d'étanchéité (37) circonférentiellement dans une large mesure au centre entre les éléments de guidage (50) en forme de bouton.

9. Soupape de commande selon l'une des revendications 4 à 7, **caractérisée en ce que** les alésages de purge (45) sont ménagés dans la bague d'étanchéité (37) au niveau des interruptions (52) de l'élément de guidage (51) en forme de nervure annulaire.

10. Soupape de commande selon l'une des revendications 5 à 9, **caractérisée en ce que** le conduit de purge (49) est conçu sous la forme d'une conduite tubulaire cylindrique ou d'une conduite tubulaire cylindrique annulaire qui est formée au centre dans le piston de commande ou coaxialement à l'axe central (53) du piston de commande (22).

11. Soupape de commande selon l'une des revendications 5 à 9, **caractérisée en ce que** l'espace de purge annulaire (46, 47) est en liaison avec le conduit de purge (49) par le biais d'au moins un alésage de purge radial (48), ménagé dans le piston de commande (22, 36) .
